## Europäisches Patentamt
## European Patent Office
## Office européen des brevets

(19)

(11) Veröffentlichungsnummer: **0 184 066**
**A1**

# (12) EUROPÄISCHE PATENTANMELDUNG

(21) Anmeldenummer: **85114672.0**

(22) Anmeldetag: **19.11.85**

(51) Int. Cl.⁴: **A 47 J 31/40**

(30) Priorität: **30.11.84 DE 3443718**

(43) Veröffentlichungstag der Anmeldung:
**11.06.86 Patentblatt 86/24**

(84) Benannte Vertragsstaaten:
**CH LI NL SE**

(71) Anmelder: **HGZ Maschinenbau AG**
**Zehntenhausstrasse 15-21**
**CH-8046 Zürich(CH)**

(72) Erfinder: **Sager, Peter, Ing. HTL**
**Rebbergstrasse 25**
**CH-8113 Boppelsen(CH)**

(74) Vertreter: **Patentanwälte Dipl.-Ing. Rudolf Bibrach**
**Dipl.-Ing. Elmar Rehberg**
**Pütterweg 6 Postfach 738**
**D-3400 Göttingen(DE)**

(54) **Kaffeezubereitungsmaschine.**

(57) Die Kaffeezubereitungsmaschine ist mit einem Gehäuse (1) versehen, an dem über den Umfang verteilt ein mit einer Dichtung (10) versehener Zugabetrichter (21) für das Kaffeepulver, ein mit einem Sieb (30) versehener Auslauf (28) für das zubereitete Kaffeegetränk sowie eine Öffnung (34) zum Abführen der Rückstände vorgesehen ist. Weiterhin ist im Gehäuse (1) ein absatzweise angetriebener Rotor (6) gelagert, der mindestens einen randoffenen und in der Brühstellung durch das Sieb (30) des Auslaufs (28) abgedeckten Arbeitsraum (17) aufweist, in welchem das Kaffeepulver mittels eines im Rotor (6) verschiebbar gelagerten Kolbens (14) verdichtet wird und der in der Brühstellung von heißem Wasser in Richtung auf den Auslauf (28) am Gehäuse (1) durchflossen ist. Es ist eine den Arbeitsraum (17) in der Brühstellung abschließende und gegenüber einer Sitzfläche (5) angepreßte Dichtung (10) zwischen Rotor (6) und Gehäuse (1) vorgesehen. Diese einzige Dichtung (10) dichtet nicht nur den Arbeitsraum (17) in der Brühstellung, sondern z. B. auch den Zugabetrichter (21) ab. Die einzige Dichtung (10) umschließt den Arbeitsraum dauernd und ist auf dem Rotor (6) angeordnet. Die dem Rotor (6) zugekehrte Gehäusefläche ist als Sitzfläche (5) ausgebildet, gegen die die Dichtung (10) während des Umlaufs des Rotors (6) im Gehäuse (1) dauerhaft angepreßt ist.

EP 0 184 066 A1

./...

Fig. 1

Kaffeezubereitungsmaschine

Die Erfindung bezieht sich auf eine Kaffeezubereitungsmaschine mit einem Gehäuse, an dem über den Umfang verteilt ein mit einer Dichtung versehener Zugabetrichter für das Kaffeepulver, ein mit einem Sieb versehener Auslauf für das zubereitete Kaffeegetränk sowie eine Öffnung zum Abführen der Rückstände vorgesehen sind, mit einem in dem Gehäuse gelagerten und absatzweise angetriebenen Rotor, der mindestens einen randoffenen und in der Brühstellung durch das Sieb des Auslaufs abgedeckten Arbeitsraum aufweist, in welchem das Kaffeepulver mittels eines im Rohr verschiebbar gelagerten Kolben verdichtet wird und in der Brühstellung von heißem Wasser in Richtung auf den Auslauf am Gehäuse durchflossen ist, und mit einer, den Arbeitsraum in der Brühstellung abschließenden und gegenüber einer Sitzfläche angepreßten Dichtung zwischen Rotor und Gehäuse.

Eine derartige Kaffeezubereitungsmaschine ist aus der DE-PS 1 248 883 oder der DE-OS 1 812 654 bekannt. Der Rotor ist hier als Zylinder ausgebildet. Auf dem Rotor sind mehrere Arbeitsräume, denen jeweils ein Kolben zugeordnet ist, angeordnet. Der Rotor wird in einem Gehäuse absatzweise angetrieben, welches zwecks vereinfachter Herstellung den Rotor nicht passend zylindrisch umgibt, sondern wobei ein Zwischenraum zwischen Rotor und Gehäuse mit über den Umfang wechselnden Querschnitten gebildet ist. Nur in den einzelnen Arbeitsstationen, die beim absatzweise erfolgenden Umlauf des Rotors erreicht werden, wird eine Anpassung über die Form angestrebt. Der mit dem Sieb versehene Auslauf für das zubereitete Kaffeegetränk ist hier als Brühkopf ausgebildet, der zu Reinigungszwecken von dem Gehäuse abnehmbar ist. In seiner ortsfesten im Gehäuse eingesetzten Stellung drückt der Brühkopf eine an ihm ortsfest vorgesehene und gelagerte Dichtung so gegen den Rotor, daß der Arbeitsraum nur in der Brühstellung abgeschlossen ist. Die mit der Dichtung zusammenarbeitende Sitzfläche ist dabei die zylindrische Fläche des Rotors. Hierdurch bedingt, d. h. infolge der Verschneidungskurve zwischen zwei Zylindern, muß sowohl die Dichtung als auch das dem Rotor zugekehrte Ende des Brühkopfes eine vergleichsweise komplizierte Formgebung aufweisen. Der als Brühkopf ausgebildete Auslauf für das Kaffeegetränk trägt neben der Dichtung noch ein Sieb, welches dem Arbeitsraum zugekehrt so angeordnet ist, daß das durch den Kolben im Arbeitsraum zusammengepreßte Kaffeepulver an dem Sieb seinen Widerstand findet. Das Sieb ist ebenso wie die Dichtung ortsfest gelagert und erstreckt sich in die Nähe des Rotors. Der Abstand des Siebes von der Achse des Rotors bzw. der Umfangsfläche des Rotors muß genau eingestellt werden. Wenn das Sieb zu nahe am Arbeitsraum steht, dann schleift das Sieb an dem Rotor; am Rotor tritt eine Riefenbildung auf, die dazu führt, daß auch die Sitzfläche der Dichtung entsprechend beschädigt wird, so daß die Dichtung ihre Funktion nicht mehr erfüllen kann. Die hierdurch verursachten Undichtigkeiten führen zunächst dazu, daß die portionsweise abgegebene Menge des zubereiteten Kaffeegetränks absinkt. In der Folge führt dies dann zu einem Totalausfall der Kaffeezubereitungsmaschine. Wird andererseits das Sieb zu weit vom Arbeitsraum und vom Rotor weg angestellt, dann bildet sich auf der Seite des Getränkeauslaufs vor dem Sieb eine Scheibe aus Kaffeesatz, der an dem Sieb zurückbleibt und bei der Drehung des Rotors nicht mitgenommen und nicht ausgestoßen wird. Diese Scheibe aus Kaffeesatz verfestigt sich und führt zu Verstopfungen, weil der Wasserdurchsatz durch den Arbeitsraum während des Brühvorganges behindert wird. Wie schon angedeutet muß der als Brühkopf ausgebildete Getränkeauslauf mit seiner Dichtung auch den Arbeitsraum in der Brühstellung abdichten, d. h. diese Dichtung muß mit entsprechender Anpreßkraft gegen den Rotor gedrückt werden. Diese beiden Erfordernisse zwingen zu einem sorgfältigen Anstellen des Auslaufs relativ zum Rotor, bei dem

0184066

eine hinreichend gute Lage des Siebes mit der erforderlichen
Anpreßkraft der Dichtung erreicht werden soll. Da die Dichtung
ortsfest angeordnet ist, wird ihre Dichtwirkung in dem Moment
aufgehoben, wo der Rotor aus der Brühstellung heraus beginnt absatzweise weiterzudrehen. Da der Arbeitsraum zu diesem Moment
noch unter Druck steht, erfolgt beim Überfahren des Dichtungsrandes mit dem Arbeitsraum ein Ausspritzen von Teilen des
im Arbeitsraum eingeschlossenen ausgelaugten Kaffeepulvers
zusammen mit Wasser. Diese Rückstände spritzen in den Zwischenraum zwischen Rotor und Gehäuse noch bevor die Öffnung
zum Abführen der Rückstände erreicht wird. Dies führt wiederum dazu, daß der Zwischenraum zwischen Rotor und Gehäuse
im Laufe der Zeit von Kaffeesatz angefüllt wird. Andererseits
ist im Bereich des Zugabetrichters für das Kaffeepulver in
den Arbeitsraum auch eine Dichtung ortsfest vorgesehen, die in
aller Regel als metallische Dichtung ausgebildet ist. Da die
Dichtheit einer solchen metallischen Dichtung nur begrenzt
ist und/oder bei eingetretener Riefenbildung am Rotor, besteht
die Gefahr, daß das Kaffeepulver am Zugabetrichter nicht vollständig in den Arbeitsraum gelangt, sondern Teile davon auch
hier in den Zwischenraum zwischen Rotor und Gehäuse fallen.
Weiterhin läßt es sich nicht vermeiden, daß Dampf, der sich aus
dem heißen Kaffeesatzpulver im Bereich der Öffnung zum Abführen der Rückstände löst, nach oben durch den Zwischenraum bis
in den Bereich des Zugabetrichters gelangt und dort in das
einzufüllende Kaffeepulver eintritt. Hierdurch kann das Kaffeepulver im Zugabetrichter hart und fest werden, was nicht
nur zu einer Behinderung des ordnungsgemäßen Einfallens, d. h.
Nachrutschens des Kaffeepulvers in den Arbeitsraum führen
kann, sondern auch die Riefenbildung am Rotor begünstigen kann,
so daß die beiden ortsfesten Dichtungen nicht mehr dichten können. Hauptsächlich tritt aber durch die Ansammlung von verrottendem Kaffeepulver in dem Zwischenraum zwischen Rotor und Gehäuse eine geschmackliche Beeinträchtigung des zubereiteten Kaffeegetränks ein, die als störend empfunden wird.

Aus der DE-OS 25 44 060 oder der OE-PS 334 001 ist es bereits bekannt, den Rotor nicht mehr zylindrisch, sondern als senkrecht zur Drehachse abgeplattete Kugel auszubilden. Auch dabei ist das Gehäuse mit seiner Innenwandung dieser Kugelform nicht spielfrei angepaßt, sondern es entsteht auch hier ein Zwischenraum mit welchselnden Querschnitten über den Umfang. Es ergeben sich hier ebenfalls die Probleme der Geschmacksbeeinträchtigung infolge verrottenden Kaffeepulvers im Zwischenraum sowie die Riefenbildung am Rotor. Durch die Riefenbildung wird auch hier die Dichtheit des Arbeitsraums in der Brühstellung zerstört. Dies führt dazu, daß der Rotor durch einen Monteur ausgewechselt werden muß, denn bei undichtem Arbeitsraum in der Brühstellung ist ein Druckaufbau im Arbeitsraum nicht mehr möglich. Die beiden Dichtungen im Bereich des Auslaufs für das zubereitete Kaffeegetränk und den Zugabetrichter sind auch hier ortsfest angeordnet. Nur die Form der Dichtung vereinfacht sich. Entsprechend der sich hier zwischen Zylinder und Kugel bildenden Verschneidungskurve kann die Dichtung als ein durch Drehen herstellbarer Ring ausgebildet sein. Beim Aufpressen der Dichtung gegen eine Kugeloberfläche - von außen - entsteht an der Dichtung eine Kraftkomponente, die radial nach außen gerichtet ist. Dies bedeutet, daß die Dichtung in der Anpreßstellung im Aufweit-sinne beansprucht wird, was für die Dichtheit ungünstig ist.

Der Erfindung liegt die Aufgabe zugrunde, eine Kaffeezubereitungsmaschine der eingangs beschriebenen Art dahingehend zu verbessern, daß eine Riefenbildung an der mit der Dichtung zusammenarbeitenden Sitzfläche durch das Sieb des Auslaufs ver-

hindert wird, damit die Dichtung länger die Dichtheit des Arbeitsraums garantieren kann und somit eine Erhöhung der Lebensdauer der Kaffeemaschine eintritt. Darüber hinaus ist es wichtig, zu verhindern, daß sich im Zwischenraum zwischen Rotor und Gehäuse verrottendes Kaffeepulver ansammelt, welches das zubereitete Kaffeegetränk geschmacklich beeinträchtigt.

Erfindungsgemäß wird dies bei einer Kaffeezubereitungsmaschine der eingangs beschriebenen Art dadurch erreicht, daß nur eine einzige Dichtung für den Arbeitsraum und den Zugabetrichter vorgesehen ist, daß diese einzige Dichtung den Arbeitsraum dauernd umschließend auf dem Rotor angeordnet ist, und daß die dem Rotor zugekehrte Gehäusefläche als Sitzfläche ausgebildet ist, gegen die die Dichtung während des Umlaufs des Rotors im Gehäuse dauerend angepresst ist. Es ist nunmehr nur noch eine einzige Dichtung vorgesehen. Diese ist aber nicht mehr auf dem ortsfesten Teil, sondern auf dem umlaufenden Teil, nämlich dem Rotor angeordnet. Dies führt dazu, daß der Arbeitsraum gegenüber dem Gehäuse nicht nur in der Brühstellung und in der Einzelstellung des Kaffeepulvers abgedichtet sind, sondern daß eine Abdichtwirkung auch im Bereich der Öffnung zum Abführen der Rückstände erreicht wird. Darüber hinaus ist aber die Dichtwirkung auch in sämtlichen Zwischenstellungen während des Umlaufes zwischen den einzelnen Arbeitspositionen vorhanden, so daß damit gleichzeitig ein Austreten von Kaffeepulver in den auch hier zwischen Rotor und Gehäuse vorgesehenen Zwischenraum nicht mehr möglich ist. Da sich im Zwischenraum Kaffeepulver nicht mehr ansammeln kann, tritt auch dort eine Verrottung und eine geschmackliche Beeinträchtigung des zubereiteten Kaffeegetränks nicht mehr ein. Die einzige Dichtung erfüllt somit eine Anzahl weiterer Funktionen, die sie bei ihrer bisherigen ortsfesten Anordnung im Bereich des Auslaufs für das Kaffeegetränk nicht erfüllen konnte. Trotz des Minimalaufwandes von nur einer Dichtung wird somit die Bedeutung dieser Dichtung wesentlich gesteigert bzw. verändert. Gleichzeitig wird die dem Rotor zugekehrte Gehäusefläche als Sitzfläche ausgebildet und benutzt, was herstellungsmäßig gegenüber den bekannten Kaffeezubereitungsmaschinen keinen Mehraufwand bedeutet. Da gleichzeitig aber das Sieb am Auslauf für das zubereitete Kaffeegetränk nach wie vor stillsteht bzw. ortsfest angeordnet ist und die Sitzfläche an der Innenwandung des Gehäuses ebenfalls ortsfest vorgesehen ist, kann das Sieb nie an der als Sitzfläche dienenden Gehäusewandung schleifen, so daß auf jeden Fall die Sitzfläche frei von einer Riefenbildung bleibt. Durch die erfindungsgemäße Anordnung und Ausbildung werden auch eine Reihe weiterer unerwarteter Vorteile erreicht. Der Rotor wird in seiner Formgebung wesentlich einfacher und ist damit preisgünstiger herstellbar. Auch der Auslauf für das zubereitete Kaffeegetränk wird einfacher und kleiner, weil er die Dichtung und deren Anpreßmittel nicht mehr aufweist. Auch kann der Leitungsweg durch den Auslauf verkürzt werden. Während die bisher am abnehmbaren Auslauf angeordnete Dichtung für die Bedienungsperson der Kaffeemaschine zugänglich war und bei abgenommenem Auslauf zu Reinigungszwecken ebenfalls behandelt werden mußte, ist die einzige erfindungsgemäße Dichtung auf dem Rotor jetzt für die Bedienungsperson nicht mehr zugänglich. Damit besteht auch keine Möglichkeit mehr, daß die Dichtung bei der Abnahme des Auslaufes zu Reinigungszwecken versehentlich verletzt und/oder falsch eingesetzt wird. Da die mit der Dichtung zusammenarbeitende Sitzfläche von der inneren Oberfläche des Gehäuses gebildet wird und nicht mehr von dem Rotor, besteht jetzt auch keine Möglichkeit mehr, daß die Bedienungsperson die empfindliche Sitzfläche beschädigt, da mit einem Löffel oder einem anderen Gegenstand, der z. B. durch den Zugabetrichter geführt wird, um das Kaffeepulver nachrutschen zu lassen, keine Möglichkeit mehr besteht, die Sitzfläche an der inneren Gehäusewandung zu erreichen. Weiterhin ist es vorteilhaft, daß das Sieb am Auslauf nur einmal, d. h. bei seiner Herstellung und Montage eingestellt und positioniert wird, so daß das Sieb dann relativ zum Arbeitsraum immer in der richtigen Lage angeordnet ist. Auch das Abnehmen des Auslaufs für das zubereitete Kaffeegetränk mit dem derauf sitzenden Sieb, welches zu Reinigungszwecken erforderlich ist, führt nicht zu einer Veränderung der Relativlage des Siebs zum Arbeitsraum, wenn der Auslauf wieder gehäuseseitig angesetzt ist. Damit besteht auch keine Möglichkeit, den Siebabstand etwa falsch einzustellen.

Vorteilhaft kann die Sitzfläche am Gehäuse kugelförmig ausgebildet sein. Hierdurch wird sowohl die Dichtung als auch die randoffene Begrenzung des Arbeitsraumes ringförmig, also durch einen einfachen Drehvorgang auf eine Drehbank herstellbar.

Der Rotor kann geteilt ausgebildet sein und einen die Drehachse festlegenden und die Lagerung mitbildenden Stutzenträger sowie einen Rohrstutzen aufweisen, in welchem die einzige Dichtung randseitig gelagert ist. Damit wird die Formgebung des Rotors weitgehend frei von der kugelförmigen Sitzfläche. Lediglich die Begrenzung des Arbeitsraumes und die dort vorgesehene Dichtung erfordert die entsprechende Formgebung. Im übrigen kann die Oberfläche des Rotors völlig frei von der gehäuseseitigen Sitzfläche gestaltet werden. Es ergibt sich bei einer geteilten Rotorausbildung der besondere Vorteil, daß der Rohrstutzen am Stutzenträger leicht gegen einen anderen Rohrstutzen mit z. B. einem anders bemessenen Arbeitsraum austauschbar ist, um auf diese Art und Weise eine Anpassung der Maschine an Kaffees verschiedenen spezifischen Gewichtes und/oder der Dosierung des Kaffeepulvers zu erreichen.

Der Rohrstutzen weist mit seiner einzigen Dichtung zweckmäßig einen kleineren Außendurchmesser auf als die den Auslauf aufnehmende Öffnung im Gehäuse. Dieses Merkmal ist sogar dann erforderlich, wenn die Sitzfläche am Gehäuse als Kugelfläche ausgebildet ist und keine sonstigen Maßnahmen getroffen sind, die eine Montage der Teile zulassen. Der Einbau des Rohrstutzens erfolgt dann durch die den Auslauf aufnehmende Öffnung. Es versteht sich,

0184066

daß auch jede andere Öffnung am Gehäuse zu Zwecken der Montage
des Rotors entsprechend ausgebildet sein kann. Bei zylindrischer
Ausbildung des Rotors, d. h. zylinderförmiger Begrenzung an der
randoffenen Seite des Arbeitsraumes, ist eine solche Ausbildung
nicht erforderlich. Zwischen dem das Sieb tragenden Auslauf und
der Öffnung kann ein Einsatzkörper vorgesehen sein, dessen
der einzigen Dichtung zugekehrte Fläche einen Teil der Sitzfläche bildet. Dies bedeutet, daß der Einsatzkörper montiert
im Gehäuse zusammen mit der übrigen Sitzfläche des Gehäuses
bearbeitet wird. Der Einsatzkörper ist dann zweckmäßig dauerhaft am Gehäuse befestigt, so daß er nur zur Montage des
Rotors entfernt wird. Bei der normalen Reinigung des Auslaufs
verbleibt der Einsatzkörper hingegen am Gehäuse.

Der Zugabetrichter für das Kaffeepulver kann von einer trichterförmigen Öffnung im Gehäuse gebildet sein. Dies vereinfacht seine Herstellung im Vergleich zu einem gesonderten Anstellstutzen. Diese vereinfachte Ausbildung ist ebenfalls
durch die Verwendung der einzigen Dichtung möglich, weil diese
ja auch in der Einzelposition die Dichtwirkung übernimmt.

0184066

Die Erfindung wird anhand eines bevorzugten Ausführungsbeispiels weiter beschrieben. Es zeigt:

Fig. 1    einen Vertikalschnitt durch die für die Erfindung wichtigen Teile der Kaffeezubereitungsmaschine gemäß der Linie I-I in Fig. 2,

Fig. 2    einen Horizontalschnitt durch die Kaffeezubereitungsmaschine gemäß der Linie II-II in Fig. 1

und

Fig. 3    eine Schnittdarstellung der Heißwasserzufuhr zum Rotor gemäß der Linie III-III in Fig. 2.

Die Kaffeezubereitungsmaschine weist ein Gehäuse 1 auf, zu dem ein Deckel 2 gehört. Gehäuse 1 und Deckel 2 bestehen, wie auch viele sonstige Teile der Kaffeezubereitungsmaschine aus Metall. Das Gehäuse 1 und der Deckel 2 bilden innen einen von der Gehäusewandung 3 eingeschlossenen Innenraum 4. Ein Teil dieser Gehäusewandung 3 ist als Sitzfläche 5 kugelförmig ausgebildet.

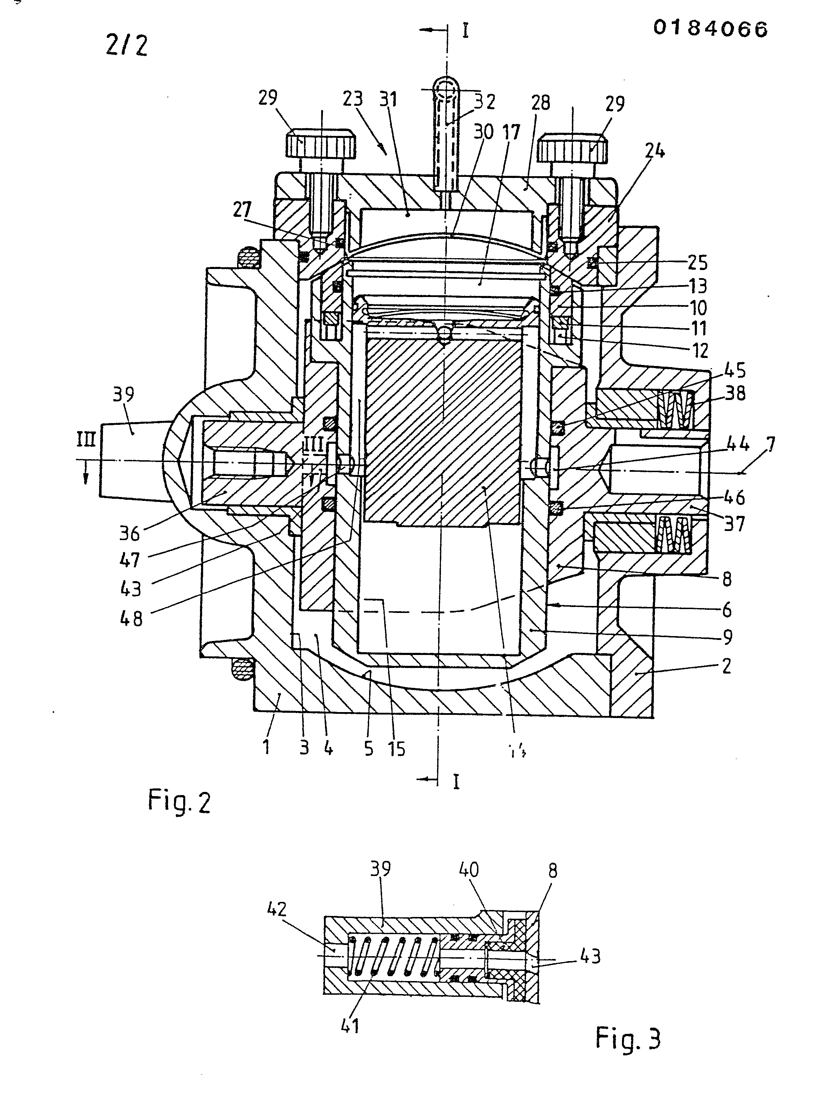

In dem Innenraum 4 ist ein Rotor 6 drehbar gelagert, der um eine Drehachse 7 absatzweise umlaufend angetrieben wird. Der Rotor 6 ist im wesentlichen zweigeteilt und weist einen Stutzenträger 8 und einen Rohrstutzen 9 auf. Eine Dichtung 10 ist auf dem Rohrstutzen gelagert und besteht im einzelnen aus einem Ring aus Polytetrafluor-Äthylen, der gegenüber der Sitzfläche 5 des Gehäuses 1 angestellt ist. Dieser Ring ist durch einen Auflagering 11 hinterfüttert. Die Anpreßkraft zu der Sitzfläche 5 wird durch eine Feder 12 bereitgestellt. Die Dichtung 10 umschließt den randoffenen Bereich des Rohrstutzens 9 und ist gegenüber diesen mit Hilfe eines O-Rings 13 abgedichtet. Im Rohrstutzen 9 ist ein Kolben 14 vorgesehen, der in einer gestuften Bohrung 15 geführt ist. Der Kolben 14 besitzt eine metallische Dichtung 16 und teilt somit im Rohrstutzen 9 einen endseitig offenen Arbeitsraum 17 ab. Der Kolben 14 trägt auf seiner Vorderseite ein Zulaufsieb 18 und ist von mindestens einer Bohrung 19 radial durchsetzt, über die heißes Wasser auf einem noch zu beschreibenden Weg über das Zulaufsieb 18 verteilt in den Arbeitsraum 17 gelangen kann, um in der Brühstellung (Fig. 2) das im Arbeitsraum 17 eingeschlossene und gepreßt gehaltene Kaffeepulver zu durchdringen.

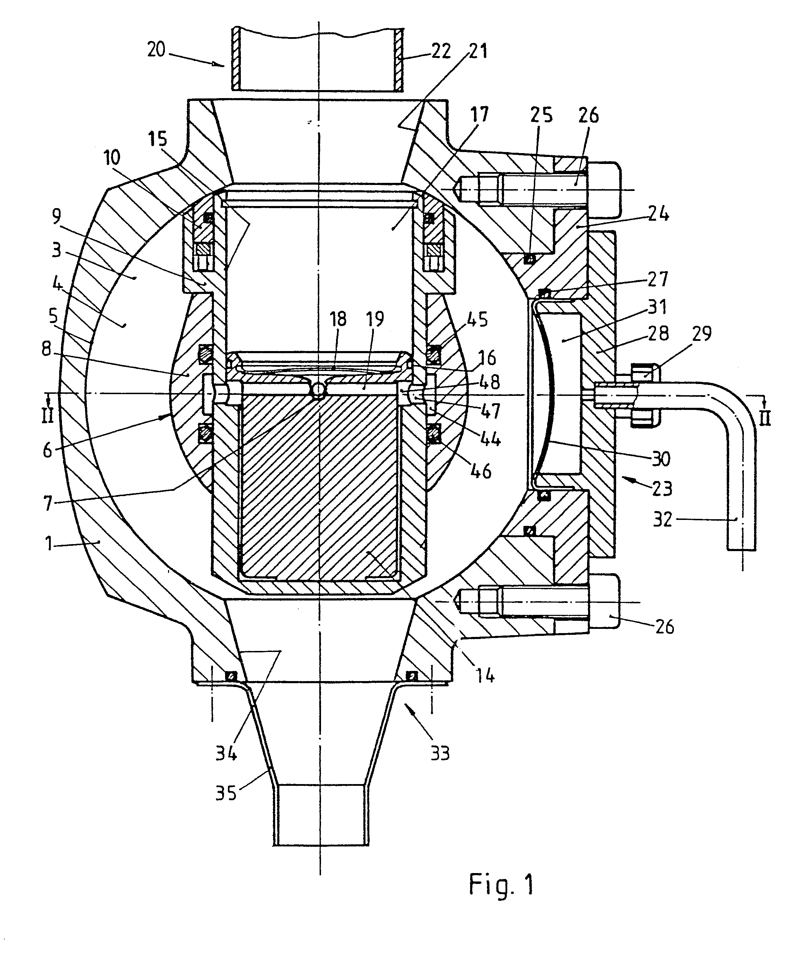

Wie Fig. 1 erkennen läßt, sind am Gehäuse 1 drei Stationen verwirklicht, die der Rotor 6 absatzweise angetrieben nach einander anführt. Zweckmäßig oben am Gehäuse 1 (Fig. 1) ist eine Zugabestation 20 für gemahlenes und mengenmäßig abgemessenes Kaffeepulver vorgesehen. Am Gehäuse 1 ist dieserhalb ein Zugabetrichter 21 gebildet, über dem ein Pulvereinfüllstutzen 22 einer anderen Einrichtung positioniert sein kann, so daß das Kaffeepulver von oben durch den Pulvereinfüllstutzen 22 und den Zugabetrichter 21 in den Arbeitsraum 17 gelangen kann

Am Gehäuse 1 ist etwa um 90° zu der Zugabestation 20 versetzt eine Brühstation 23 vorgesehen. Hier ist am Gehäuse 1 ein Einsatzkörper 24 mit Hilfe einer Dichtung 25 gehäuseseitig gelagert. Der Einsatzkörper 24 ist mit Hilfe von Paßschrauben 26 am Gehäuse 1 dauerhaft befestigt, d. h. er ist nur dazu bestimmt, ggfs. von einem Monteur abgenommen zu werden, wenn am Rotor 6 ein Defekt vorliegt oder z. B. ein Rohrstutzen 9 gegen einen anderen Rohrstutzen mit abweichenden Abmessungen ausgetauscht werden muß, um den Arbeitsraum 17 anders zu dimensionieren und auf diese Art und Weise eine Anpassung an die Menge bzw. das spezifische Gewicht des Kaffeepulvers erfolgen soll. Ansonsten dient der Einsatzkörper 24 nur dazu, den Rohrstutzen 9 an dem Stutzenträger 8 montieren zu können. Auf jeden Fall bildet der Einsatzkörper 24 aber auch einen Teil der Sitz fläche 5 für die Dichtung 10, so daß diese Sitzfläche 5 bei am Gehäuse 1 montiertem Einsatzkörper 24 bearbeitet bzw. hergestellt wird. Der Einsatzkörper 24 weist eine Bohrung mit einer Dichtung 27 auf, in der ein Auslauf 28 mit Hilfe von Schrauben 29 abnehmbar befestigt ist. Der Auslauf 28 trägt auf seiner einen Seite ein Sieb 30, welches entsprechend der kugeligen Sitzfläche 5 ebenfalls kugelförmig gestaltet und so angeordnet ist, daß es diese Kugelfläche der Sitzfläche 5 ergänzt. Dieses Sieb 30 dient dazu, ein Widerlager für das gepreßte Kaffeepulver in der Brühstellung (Fig. 2) zu bilden und andererseits in der Brühstellung das Kaffeegetränk durchzulassen, welches über einen Sammelraum 31 zusammengeführt wird und über ein Auslaufröhrchen 32 in die Kaffeetasse oder einen sonstigen Behälter gelangt. Der Auslauf 28 muß zu Reinigungszwecken von dem Benutzer der Kaffeezubereitungsmaschine abgenommen, gereinigt und wieder angesetzt werden. Hierzu dienen die Schrauben 29. Dabei ist es wesentlich, daß das Sieb 30 wieder genau in seine die Sitzfläche 5 ergänzende Lage kommt, so daß die Dichtung 10 nicht beschädigt wird. Das Sieb 30 muß mit seiner dem Arbeitsraum 17 zugekehrten Oberfläche möglichst nahe an der Kugelfläche der Sitzfläche 5 angestellt sein, ohne die Dichtung 10 zu berühren. Eine Berührung würde zu Schleifspuren an der Dichtung 10 führen, so daß diese undicht würde. Würde das Sieb 30 dagegen zu weit von der Sitzfläche 5 entfernt angestellt werden, entstünde ein Zwischenraum, der sich in der Brühstellung mit Kaffeepulver füllen würde, welches als scheibenförmiger Körper beim weiteren Umlauf des Rotors vom Arbeitsraum 17 nicht mitgenommen würde, sondern sich verfestigen würde und den erneuten Durchlauf von Kaffeegetränk behindern würde.

Als dritte Station - zweckmäßig am Gehäuse 1 unten (Fig. 1) ist eine Ausstoßstation 33 für die Rückstände, also im wesentlichen den ausgelaugten Kaffeesatz- vorgesehen. Das Gehäuse 1 weist hier eine Öffnung 34 auf, an die ein Stutzen 35 angeschlossen sein kann, der wiederum zur Montage eines Schlauches dienen kann, wenn der Kaffeesatz beispielsweise naß ausgespült und hinweggeführt werden soll.

Wie Fig. 2 erkennen läßt, weist der Stutzenträger 8 hinsichtlich seiner Lagerung an der Drehachse 7 Drehzapfen 36 und 37
auf. Der Drehzapfen 36 ist in einer Bohrung des Gehäuses 1 entsprechend gelagert, wobei in diesem Bereich des Gehäuses 1 im
übrigen ein nicht dargestellter Durchlauferhitzer für die Erzeugung des benötigten heißen Wassers angeschlossen sein kann.
Der Drehzapfen 37 auf der anderen Seite ist in dem Deckel 2
gelagert und dient gleichzeitig dem Anschluß eines Drehmotors,
der für den absatzweise erfolgenden Antrieb des Rotors 6 sorgt.
Der Rotor 6 wird über Tellerfedern 38 und entsprechende Beilagekörper auf beiden Seiten in einer solchen Relativlage gehalten,
daß die Fläche der Dichtung 10, die mit der Sitzfläche 5 zusammenarbeitet, sich in ihrer richtigen ordnungsgemäßen Position
befindet. Es ist deutlich insbes. aus Fig. 1 ersichtlich, daß
beim Umlauf des Rotors 6 allein die Dichtung 10 an der Sitzfläche 5 zur Anlage kommt, während ansonsten zwischen den Teilen
des Rotors und der Gehäusewandung 3 sowie der Sitzfläche 5 ein
recht großer Zwischenraum gebildet ist. Die Dichtung 10 ist in
jeder der drei Stellungen, nämlich der Zugabestation 20, der
Brühstation 23 und der Ausstoßstation 33 wirksam. Auch zwischen
diesen Stationen liegt die Dichtung 10 entweder ganz an der
Sitzfläche 5 oder aber zumindest teilweise an dieser an.

Für die Zufuhr des heißen Wassers, welches in einem Durchlauferhitzer erzeugt und bereitgestellt werden kann, ist eine in
einem Gehäusefortsatz 39 gelagerte Steuerdichtung 40 (Fig. 3)
vorgesehen. Die Steuerdichtung 40 wird über eine Feder 41 an den
Stutzenträger 8 angepreßt, der eine bzgl. der Drehachse 7 senkrechte Fläche aufweist, so daß beim Umlauf des Rotors 6 die
Steuerdichtung 40 an dieser senkrechten Fläche immer angedrückt
wird. Im Gehäusefortsatz 39 befindet sich ein Anschluß 42 für
den Eintritt des heißen Wassers, der mit der hohl ausgebildeten
Steuerdichtung 40 in dauernder Verbindung steht. Im Stutzenträger 8

ist eine Bohrung 43 vorgesehen, die in Fig. 2 gestrichelt angedeutet ist und in einer Ringnut 44 im Stutzenträger 8 endet.
Diese Ringnut 44 ist mit Hilfe von Dichtungen 45 und 46 gegenüber dem Rohrstutzen 9 abgedichtet. Der Rohrstutzen 9 besitzt
in diesem Bereich mindestens einen Durchbruch 47, der zu einem
Ringkanal 48 führt, der zwischen Kolben 14 und Rohrstutzen 9
im Bereich der Stufung der gestuften Bohrung 15 gebildet ist.
Somit kann der Kolben 14 auf seiner von der Dichtung 16 festgelegten und dem Arbeitsraum 17 abgekehrten Seite mit unter
Druck stehendem heißen Wasser beaufschlagt und aus der in Fig. 1
dargestellten Grundstellung in die in Fig. 2 wiedergegebene Arbeitsstellung während der Brühphase verschoben werden. Andererseits sind aber auch die Bohrungen 19 an den Ringkanal 48 angeschlossen, so daß das unter Druck stehende heiße Wasser in der
Brühstellung durch den Arbeitsraum 17 und damit letztlich als
Kaffeegetränk über den Auslauf 28 abgegeben werden kann.

Die Kaffeezubereitungsmaschine arbeitet wie folgt:

Wenn sich die Teile in der in Fig. 1 dargestellten Relativlage
befinden, ist der Kolben 14 in seiner zurückgefahrenen Stellung,
so daß der Arbeitsraum 17 ein vergleichsweise großes Volumen
aufweist. Die Dichtung 10 dichtet den Zugabetrichter 21 ab. Das
gemahlene und abgemessene Kaffeepulver fällt aus dem Pulvereinfüllstutzen 22 über den Zugabetrichter 21 im Gehäuse 1 in den
Arbeitsraum 17 oberhalb des Kolbens 14. Infolge der Dichtung 10
kann kein Kaffeepulver in den Innenraum 4 zwischen Gehäuse 1 und
Rotor 6 gelangen. Die Bohrung 43 des Stutzenträgers 8 befindet
sich irgendwo auf ihrem Umlauf und ist jedenfalls nicht an die
Steuerdichtung 40 und damit den Zulauf des heißen Wassers angeschlossen. Wenn jedoch der Rotor 6 um 90° weiterdreht, wird
schließlich die Brühstation 23 erreicht. Während dieser Drehbewegung dichtet die Dichtung 10 ebenfalls gegenüber der Sitzfläche 5 am Gehäuse 1 und am Einsatzkörper 24 ab. In der Brühstellung liegt die Dichtung nur noch gegenüber der Sitzfläche
des Einsatzkörpers 24 an. Der Arbeitsraum 17 ist damit auch in
Brühstellung abgeschlossen. Sobald die Bohrung 43 Anschluß an die Steuerdichtung 40 bekommt, gelangt heißes Wasser über den Anschluß 42 in die hohle Steuerdichtung 40, die Bohrung 43 in die Ringnut 44, über die Durchbrüche 47 in den Ringkanal 48 und damit auf die dem Arbeitsraum .17 abgekehrte Wirkfläche des Kolbens 14, so daß dieser zunächst aus seiner zurückgezogenen Endstellung in seine in Richtung auf das Sieb 30 vorgeschobene Arbeitsstellung in der Brühstation 23 verfahren wird. Hierdurch wird das Kaffeepulver zwischen dem Kolben 14 bzw. dem Zulaufsieb 18 und dem Sieb 30 zu einem scheibenartigen oder tablettenartigen Körper verpreßt, so daß es dicht genug zusammengehalten wird, damit in der Folge das heiße Wasser, welches auf dem gleichen Wege über die Bohrung 19 und das Zulaufsieb 18 in den Arbeitsraum 17 eintritt, das Kaffeepulver durchdringt und auslaugt. Das somit entstehende Kaffeegetränk wird durch das Sieb 30 gepreßt und im Sammelraum 31 zusammengeführt, so daß es durch das Auslaufröhrchen 32 in die Kaffeetasse oder einen anderen Behälter ausfließt. Auch während dieser Brühphase dichtet die Dichtung 10 den Arbeitsraum 17 ab, so daß weder Wasser noch Kaffeepulver noch Kaffeegetränk in den Zwischenraum zwischen Rotor 6 und Gehäuse 1 eintreten kann. Sobald der Rotor 6 weiterdreht, wird das ausgelaugte Kaffeepulver als scheibenartiger gepreßter Körper im Arbeitsraum 17 mitgenommen. Es wird schließlich die Ausstoßstation 33 erreicht, in welcher die Rückstände aus dem Arbeitsraum 17 in die Öffnung 34 und damit den Stutzen 35 gelangen. Dabei kann auch ein Ausspülen des Arbeitsraums 17 mit Wasser erfolgen. Auch dabei dichtet die Dichtung 10 an der Sitzfläche 5 ab, so daß weder Spritzwasser noch Kaffeesatz noch sonstige Rückstände in den Zwischenraum zwischen Rotor 6 und Gehäuse 1 gelangen können. Es versteht sich, daß sowohl der Arbeitsraum 17 als auch der Ringkanal 48 und damit die Wirkfläche des Kolbens 14 drucklos sind, so daß der Kolben 14 nach einer Verdrehung des Rotors um 180° wiederum die Stellung gemäß Fig. 1 erreicht, wobei der Kolben 14 entweder aufgrund seiner Schwerkraft, oder aber mit Hilfe einer hier nicht dargestellten Steuerung in seine in Fig. 1 dargestellte Ausgangslage zurückfährt. Der Zyklus der Zubereitung des Kaffeegetränks kann sich nunmehr wiederholen.

- 15 -

0184066

Bezugszeichenliste:

| | |
|---|---|
| 1 = Gehäuse | 31 = Sammelraum |
| 2 = Deckel | 32 = Auslaufröhrchen |
| 3 = Gehäusewandung | 33 = Ausstoßstation |
| 4 = Innenraum | 34 = Öffnung |
| 5 = Sitzfläche | 35 = Stutzen |
| 6 = Rotor | 36 = Drehzapfen |
| 7 = Drehachse | 37 = Drehzapfen |
| 8 = Stutzenträger | 38 = Tellerfeder |
| 9 = Rohrstutzen | 39 = Gehäusefortsatz |
| 10 = Dichtung | 40 = Steuerdichtung |
| 11 = Auflagering | 41 = Feder |
| 12 = Feder | 42 = Anschluß |
| 13 = O-Ring | 43 = Bohrung |
| 14 = Kolben | 44 = Ringnut |
| 15 = gestufte Bohrung | 45 = Dichtung |
| 16 = metallische Dichtung | 46 = Dichtung |
| 17 = Arbeitsraum | 47 = Durchbruch |
| 18 = Zulaufsieb | 48 = Ringkanal |
| 19 = Bohrung | |
| 20 = Zugabestation | |
| 21 = Zugabetrichter | |
| 22 = Pulvereinfüllstutzen | |
| 23 = Brühstation | |
| 24 = Einsatzkörper | |
| 25 = Dichtung | |
| 26 = Paßschraube | |
| 27 = Dichtung | |
| 28 = Auslauf | |
| 29 = Schraube | |
| 30 = Sieb | |

# BIBRACH & REHBERG 0184066

ANWALTSSOZIETÄT

BIBRACH & REHBERG, POSTFACH 14-53, D-3400 GÖTTINGEN

PATENTANWALT DIPL.-ING. RUDOLF BIBRACH
PATENTANWALT DIPL.-ING. ELMAR REHBERG

EUROPEAN PATENT ATTORNEYS
MANDATAIRES EN BREVETS EUROPEENS

TELEFON: (0551) 45034/35
TELEX: 96616 bipat d
POSTSCHECKKONTO: HANNOVER
(BLZ 25010030) NR. 115763-301
BANKKONTEN: DEUTSCHE BANK AG GÖTTINGEN
(BLZ 26070072) NR. 01/85900
COMMERZBANK GÖTTINGEN
(BLZ 26040030) NR. 6425722

IHR ZEICHEN
YOUR REF.
VOTRE REF.

IHR SCHREIBEN VOM
YOUR LETTER
VOTRE LETTRE

UNSER ZEICHEN
OUR REF.
NOTRE REF.
**11.847/AS5**

D-3400 GÖTTINGEN,
PUTTERWEG 6

**19.11.1984**

HGZ Maschinenbau AG
Zehntenhausstr. 15-21
CH-8046 Zürich

Patentansprüche:

1. Kaffeezubereitungsmaschine mit einem Gehäuse (1), an dem über den Umfang verteilt ein mit einer Dichtung versehener Zugabetrichter (21) für das Kaffeepulver, ein mit einem Sieb (30) versehener Auslauf (28) für das zubereitete Kaffeegetränk sowie eine Öffnung (34) zum Abführen der Rückstände vorgesehen sind, mit einem in dem Gehäuse (1) gelagerten und absatzweise angetriebenen Rotor (6), der mindestens einen randoffenen und in der Brühstellung durch das Sieb (30) des Auslaufs (28) abgedeckten Arbeitsraum (17) aufweist, in welchem das Kaffeepulver mittels eines im Rotor (6) verschiebbar gelagerten Kolbens (14) verdichtet wird und der in der Brühstellung von heißem Wasser in Richtung auf den Auslauf (28) am Gehäuse (1) durchflossen ist, und mit einer den Arbeitsraum (17) in der Brühstellung abschließenden und gegenüber einer Sitzfläche (5) angepreßten Dichtung (10) zwischen Rotor (6) und Gehäuse (1), dadurch gekennzeichnet, daß nur eine einzige Dichtung (10) für den Arbeitsraum (17) und den Zugabetrichter (21) vorgesehen ist, daß dieser einzigen Dichtung (10) den Arbeitsraum (17) dauernd umschließend auf dem Rotor (6) angeordnet ist, und daß die dem Rotor (6) zugekehrte Gehäusefläche als Sitzfläche (5) ausgebildet ist, gegen die die Dichtung (10) während des Umlaufs des Rotors (6) im Gehäuse (1) dauernd angepreßt ist.

2. Kaffeezubereitungsmaschine nach Anspruch 1, dadurch gekennzeichnet, daß die Sitzfläche (5) am Gehäuse (1) kugelförmig ausgebildet ist.

3. Kaffeezubereitungsmaschine nach Anspruch 1 oder 2, dadurch gekennzeichnet, daß der Rotor (6) geteilt ausgebildet ist und einen die Drehachse (7) festlegenden und die Lagerung mitbildenden Stutzenträger (8) und einen Rohrstutzen (9) aufweist, in welchem die einzige Dichtung (10) randseitig gelagert ist.

4. Kaffeezubereitungsmaschine nach Anspruch 1 bis 3, dadurch gekennzeichnet, daß der Rohrstutzen (9) mit seiner einzigen Dichtung (10) einen kleineren Außendurchmesser aufweist als die den Auslauf (24, 28) aufnehmende Öffnung im Gehäuse.

5. Kaffeezubereitungsmaschine nach Anspruch 4, dadurch gekennzeichnet, daß zwischen dem das Sieb (30) tragenen Auslauf (28) und der Öffnung ein Einsatzkörper (24) vorgesehen ist, dessen der einzigen Dichtung (10) zugekehrte Fläche einen Teil der Sitzfläche (5) bildet.

6. Kaffeezubereitungsmaschine nach Anspruch 5, dadurch gekennzeichnet, daß der Einsatzkörper (24) am Gehäuse (1) dauerhaft befestigt ist.

7. Kaffeezubereitungsmaschine nach Anspruch 1 bis 3, dadurch gekennzeichnet, daß der Zugabetrichter (21) für das Kaffeepulver von einer trichterförmigen Öffnung im Gehäuse (1) gebildet ist.

Fig. 1

2/2

0184066

Fig. 2

Fig. 3

**Europäisches Patentamt**

**0184066**
Nummer der Anmeldung

**EUROPÄISCHER RECHERCHENBERICHT**

EP 85 11 4672

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| D,Y | DE-A-1 812 654  (EGI S.A.R.L.)<br>* Insgesamt * | 1 | A 47 J   31/40 |
| Y | US-A-2 996 974  (FRY)<br>* Spalte 3, Zeilen 42-58; Figuren 3,4,7 * | 1 | |
| A | | 7 | |
| D,A | FR-A-2 185 377  (EGI S.R.L.)<br>* Insgesamt * | 1,2 | |
| A | US-A-2 898 843  (ROCKRIVER)<br>* Figuren 2,3 * | 1 | |
| D,A | FR-A-2 286 626  (EGI S.R.L.) | | **RECHERCHIERTE SACHGEBIETE (Int Cl 4)** |
| D,A | DE-B-1 248 883  (EGI) | | A 47 J |
| A | FR-A-2 352 525  (OGGIONI & RASTRELLI) | | |

Der vorliegende Recherchenbericht wurde für alle Patentansprüche erstellt

| Recherchenort<br>DEN HAAG | Abschlußdatum der Recherche<br>25-02-1986 | Prüfer<br>SCHARTZ J. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie.
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82